# EUROPEAN PATENT APPLICATION

(11) **EP 4 759 566 A1**
(43) Date of publication of application: **17.06.2026**
(21) Application number: 25221576.9
(22) Date of filing: 08.12.2025
(51) Int. Cl.: B60C 11/24

(54) **TIRE WEAR ESTIMATION SYSTEM AND METHOD EMPLOYING FRICTIONAL ENERGY**

(30) Priority: 16.12.2024 US 202463734221 P; 10.11.2025 US 202519383885
(71) Applicant: The Goodyear Tire & Rubber Company, Akron, OH 44316 (US)
(72) Inventor: LABELLA, Mario, L-7750 Colmar-Berg (LU); SINGH, Kanwar Bharat, Akron, 44316 (US)
(74) Representative: Kutsch, Bernd

(57) **Abstract**

A wear estimation system (10) and method for a tire (12) supporting a vehicle (14) is disclosed. The system (10) comprises a processor being in electronic communication with a CAN bus system of the vehicle and means for determining a total frictional energy of the tire. The processor is configured to: receive the total frictional energy of the tire; divide the total frictional energy into a longitudinal frictional energy estimation and a lateral frictional energy estimation with a separator; receive the longitudinal frictional energy estimation in a longitudinal acceleration classifier; determine at least one of a low, medium, and high longitudinal frictional energy estimate with the longitudinal acceleration classifier; receive the lateral frictional energy estimation in a lateral acceleration classifier; determine at least one of a low, medium, and high lateral frictional energy estimate with the lateral acceleration classifier; generate an output notification including the at least one of the low, medium, and high longitudinal frictional energy estimate and the at least one of the low, medium, and high lateral frictional energy estimate; and determine at least one of an estimated wear rate of the tire and an estimated wear state of the tire from the output notification.

## Description

### Field of the Invention

The invention relates generally to tire monitoring systems. More particularly, the invention relates to systems that predict tire wear. Specifically, the invention is directed to a system for estimating tire wear based on a determination of frictional energy.

### Background of the Invention

Tire wear plays an important role in vehicle factors such as safety, reliability, and performance. Tread wear, which refers to the loss of material from the tread of the tire, directly affects such vehicle factors. As a result, it is desirable to monitor and/or measure the amount of tread wear experienced by a tire. It is to be understood that for the purpose of convenience, the terms "tread wear" and "tire wear" may be used interchangeably. The amount of tread wear per unit time is referred to as the wear rate of the tire, and the amount of tread wear at a given time is referred to as the wear state of the tire.

One approach to the monitoring and/or measurement of tread wear has been through the use of wear sensors disposed in the tire tread, which has been referred to as a direct method or approach. The direct approach to measuring tire wear from tire-mounted sensors has multiple challenges. Placing the sensors in an uncured or "green" tire to then be cured at high temperatures may cause damage to the wear sensors. In addition, sensor durability can prove to be an issue in meeting the millions of cycles requirement for tires. Moreover, wear sensors in a direct measurement approach must be small enough not to cause any uniformity problems as the tire rotates at high speeds. Finally, wear sensors can be expensive and add significantly to the cost of the tire.

Due to such challenges, alternative approaches have been developed, which involve prediction of tread wear over the life of the tire, including indirect estimations of the tire wear rate and/or wear state. These alternative approaches have experienced certain disadvantages in the prior art due to a lack of optimum prediction techniques, which reduces the accuracy and/or robustness of the tread wear predictions. For example, many such techniques involve data or information that is not easily obtained, such as non-standard vehicle system signals, or data that is not accurate under all driving conditions.

As a result, there is a need in the art for a system and method that accurately and robustly estimates tire wear rate and/or wear state.

### Summary of the Invention

The invention relates to a system in accordance with claim 1 and to a method in accordance with claim 14.

Dependent claims refer to preferred embodiments of the invention.

According to an aspect of an exemplary embodiment of the invention, a wear estimation system for a tire is provided. The tire supports a vehicle, and the system includes a processor that is in electronic communication with a CAN bus system of the vehicle. Means are provided for determining a total frictional energy of the tire, and the processor is configured to receive the total frictional energy of the tire. The processor is configured to divide the total frictional energy into a longitudinal frictional energy estimation and a lateral frictional energy estimation with a separator. The processor is configured to receive the longitudinal frictional energy estimation in a longitudinal acceleration classifier and to determine at least one of a low, medium, and high longitudinal frictional energy estimate with the longitudinal acceleration classifier. The processor is configured to receive the lateral frictional energy estimation in a lateral acceleration classifier and to determine at least one of a low, medium, and high lateral frictional energy estimate with the lateral acceleration classifier. The processor is configured to generate an output notification including the at least one of the low, medium, and high longitudinal frictional energy estimate and the at least one of the low, medium, and high lateral frictional energy estimate, and to determine an at least one of an estimated wear rate of the tire and an estimated wear state of the tire from the output notification.

### Brief Description of the Drawings

The invention will be described by way of example and with reference to the accompanying drawings, in which:
Figure 1 is a schematic image of a vehicle and schematic perspective view of a tire that employ an exemplary embodiment of the tire wear estimation system of the present invention;
Figure 2 is a schematic plan view of the vehicle shown in Figure 1;
Figure 3 is a schematic perspective view of the vehicle shown in Figure 1 with a representation of data transmission to a cloud-based server and to a display device;
Figure 4 is a schematic perspective view of tire forces;
Figure 5 is a flow diagram of an exemplary prior art frictional energy determination, which is incorporated herein by reference;
Figure 6 is a flow diagram of aspects of an exemplary embodiment of the tire wear estimation system of the present invention; and
Figure 7 is a flow diagram of additional aspects of an exemplary embodiment of the tire wear estimation system of the present invention.

Similar numerals refer to similar parts throughout the drawings.

### Definitions

"Axial" and "axially" means lines or directions that are parallel to the axis of rotation of the tire.

"CAN bus" or "CAN bus system" is an abbreviation for controller area network system, which is a vehicle bus standard designed to allow microcontrollers and devices to communicate with each other within a vehicle, enabling communication between specific vehicle sensing and/or control systems.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Equatorial centerplane (CP)" means the plane perpendicular to the tire's axis of rotation and passing through the center of the tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Inner liner" means the layer or layers of elastomer or other material that form the inside surface of a tubeless tire and that contain the inflating fluid within the tire.

"Lateral" means an axial direction.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Tread element" or "traction element" means a rib or a block element defined by a shape having adjacent grooves.

### Detailed Description of Preferred Embodiments of the Invention

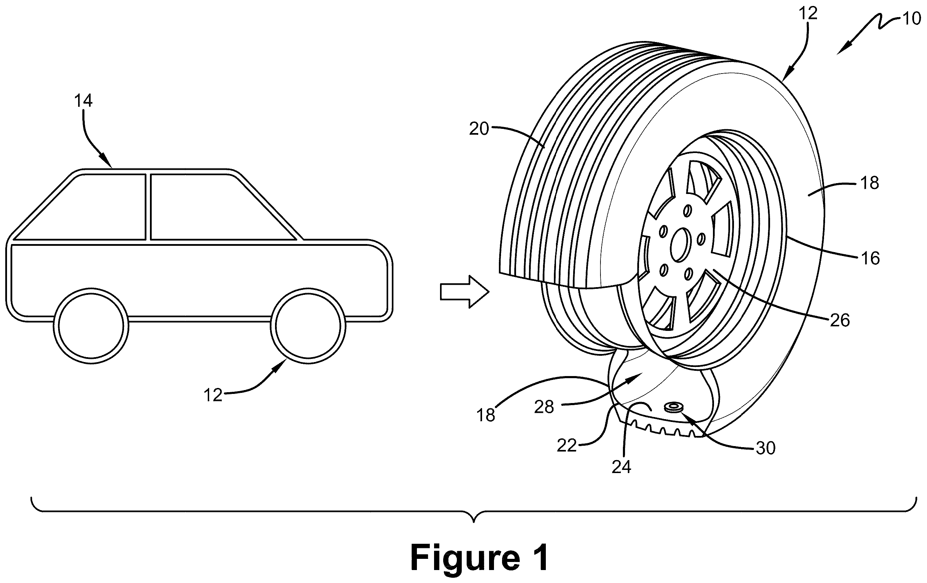

With reference to Figures 1 through 7, an exemplary embodiment of the tire wear estimation system 10 of the present invention is presented. The tire wear estimation system 10 and accompanying method attempts to overcome the challenges posed by prior art methods that measure the tire wear through direct sensor measurements. As such, the subject system and method is referred herein as an "indirect" wear sensing system and method that estimates wear rate and/or wear state. The prior art direct approach to measuring tire wear from tire-mounted sensors has multiple challenges, which are described above. The tire wear estimation system 10 and accompanying method utilize an indirect approach and avoid the problems associated with use of tire wear sensors mounted directly to the tire tread.

With particular reference to Figure 1, the system 10 estimates the wear on each tire 12 supporting a vehicle 14. For the purpose of convenience, analysis of a single tire 12 will be made, with it being understood that a similar analysis is contemplated for each tire supporting a vehicle 14 in order to assess wear for each tire. In addition, while the vehicle 14 is depicted as a passenger car, the invention is not to be so restricted, as the principles of the invention find application in other vehicle categories such as commercial trucks, off-the-road vehicles, and the like, in which vehicles may be supported by more or fewer tires 12. In addition, the invention finds application in a single vehicle 14 or in fleets of vehicles.

Each tire 12 includes a pair of bead areas 16 (only one shown) and a bead core (not shown) embedded in each bead area. Each one of a pair of sidewalls 18 extends radially outward from a respective bead area 16 to a ground-contacting tread 20, which wears over the life of the tire 12. The tire 12 is reinforced by a carcass 22 that toroidally extends from one bead area 16 to the other bead area, as known to those skilled in the art. An innerliner 24 is formed on the inside surface of the carcass 22. The tire 12 is mounted on a wheel 26 in a manner known to those skilled in the art and, when mounted, forms an internal cavity 28 that is filled with a pressurized fluid, such as air.

A sensor unit 30 may be attached to the innerliner 24 of each tire 12 by means such as an adhesive for the purpose of detecting certain real-time tire parameters inside the tire, such as tire pressure and temperature. It is to be understood that the sensor unit 30 may be attached in such a manner, or to other components of the tire 12, such as between layers of the carcass 22, on or in one of the sidewalls 18, on or in the tread 20, a combination thereof, and/or to a valve stem (not shown) of the tire. For the purpose of convenience, reference herein shall be made to mounting of the sensor unit 30 on the tire 12, with the understanding that mounting includes all such attachment.

Preferably, the sensor unit 30 is a tire pressure monitoring system (TPMS) sensor, of a type that is commercially available, and may be of any known configuration. For the purpose of convenience, the sensor unit 30 shall be referred to as a TPMS sensor. Each TPMS sensor 30 preferably also includes electronic memory capacity for storing identification (ID) information for each tire 12, known as tire ID information. Alternatively, tire ID information may be included in another sensor unit, or in a separate tire ID storage medium, such as a tire ID tag. The tire ID information may include manufacturing information for the tire 12, a service history of the tire, specific features and parameters of the tire, and/or mechanical characteristics of the tire.

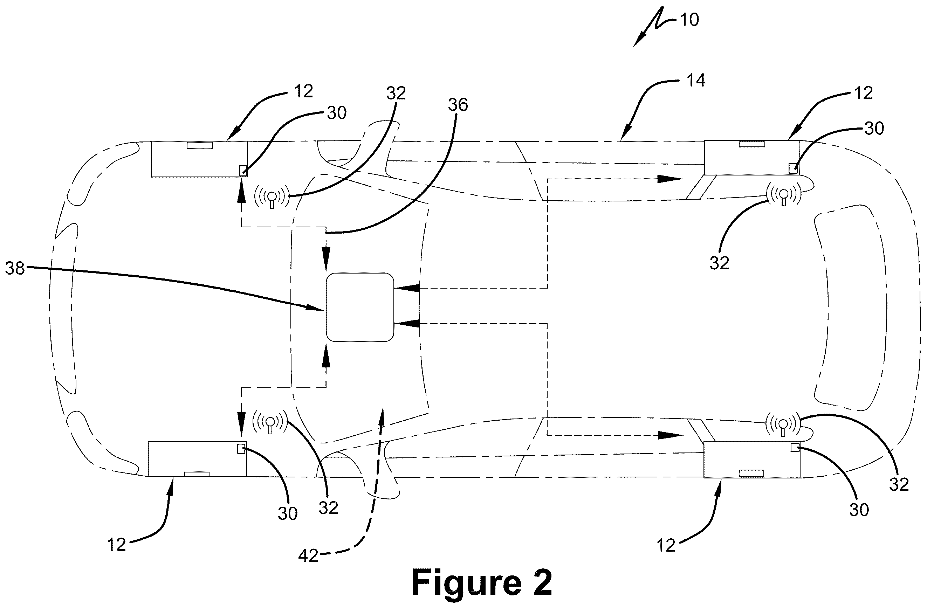

Turning now to Figure 2, each TMPS sensor 30 preferably includes a respective antenna 32 for wireless transmission 36 of the measured sensor data, such as tire pressure and temperature, as well as tire ID data, to a processor 38. The processor 38 may be mounted on the vehicle 14 as shown or may be integrated into the TPMS sensor 30. For the purpose of convenience, the processor 38 will be described as being mounted on the vehicle 14, with the understanding that the processor may alternatively be integrated into the TPMS sensor 30. Preferably, the processor 38 is in electronic communication with or integrated into an electronic system of the vehicle 14, such as the vehicle CAN bus system 42, which may also be referred to as the CAN bus.

Aspects of the system 10 preferably are executed on the processor 38 or another processor that is accessible through the vehicle CAN bus 42, which enables input of data from the TMPS sensor 30, as well as input of data from other sensors that are in electronic communication with the CAN bus. In this manner, the system 10 enables direct measurement of tire conditions such as pressure and temperature with the TPMS sensor 30, and transmission of the measurement data to the processor 38. Tire ID information preferably is also transmitted from the TPMS sensor 30 to the processor 38. The processor 38 preferably correlates the measured tire data and ID information for each tire 12 according to a measurement time, which is referred to as a timestamp.

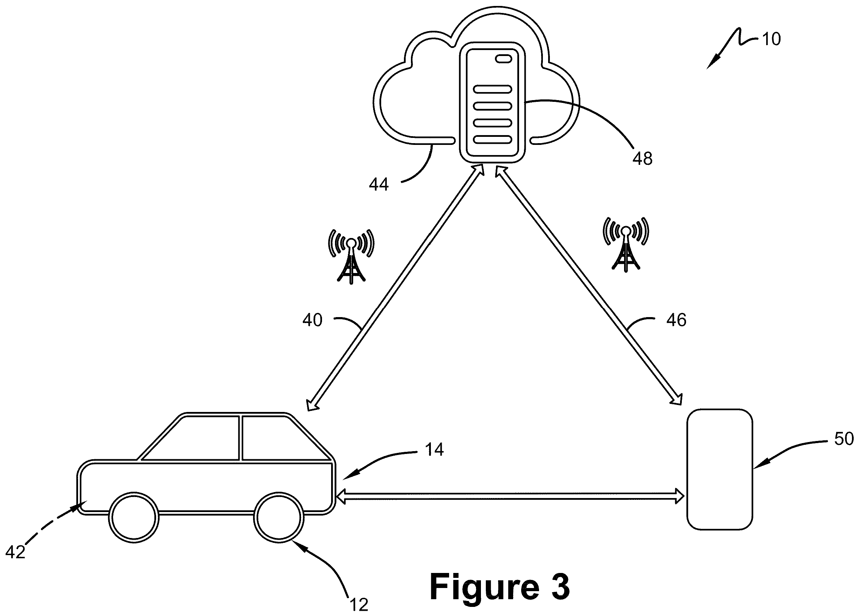

Referring to Figure 3, data including the measured tire parameters and the tire ID information may be wirelessly transmitted 40 from the processor 38 (Figure 2) and/or the CAN-bus 42 on the vehicle 14 to a remote processor 48, such as a processor in a cloud-based server 44. The cloud-based server 44 may execute aspects of the system 10. Output from the system 10 may be wirelessly transmitted 46 to a display device 50 that is accessible to an operator of the vehicle 14 or to a fleet manager.

The tire wear estimation system 10 employs a determination of forces of the tire 12 and accompanying frictional energy, and improves on systems of the prior art. An exemplary prior art system is shown and described in U.S. Patent No. 9,873,293.

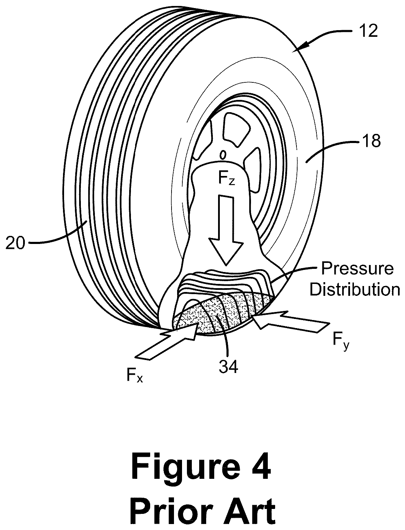

Turning to Figure 4, as described in U.S. Patent No. 9,873,293, the tire 12 creates a contact patch 34 as it rolls, with pressure being distributed across the contact patch. The pressure distribution results in tire forces F, including a vertical force or load Fz, a longitudinal force Fx, and a lateral force Fy. An inertial measurement unit (IMU) or an accelerometer mounted on the vehicle 14 or a wheel component provides a 3-axes of acceleration measurement through the vehicle CAN-bus 42, enabling the vertical force Fz, longitudinal force Fx, and lateral force Fy to be calculated.

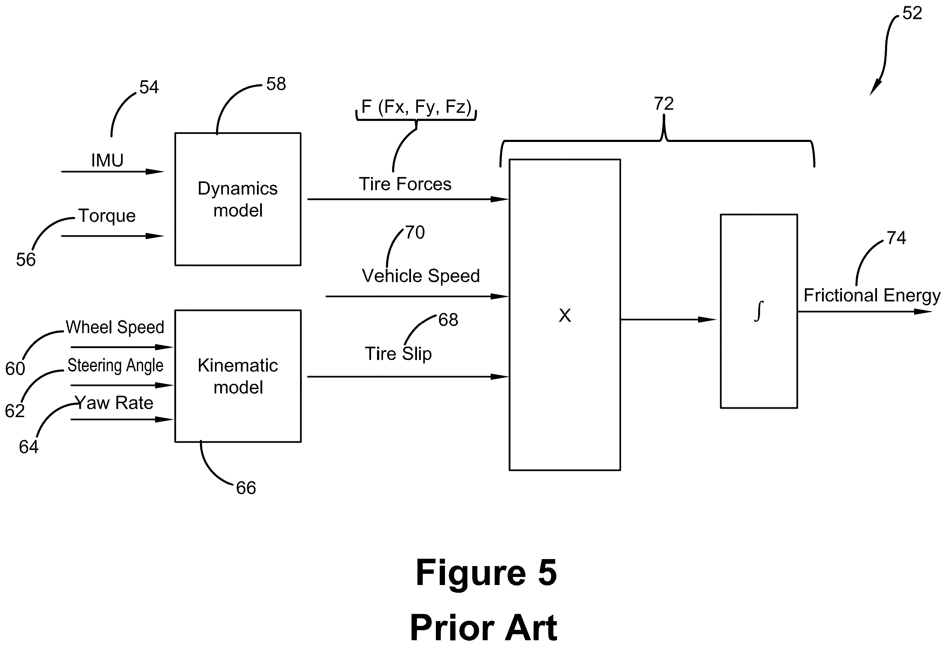

More particularly, as shown in Figure 5, a prior art system 52 receives inputs or parameters from vehicle-based sensors through the CAN bus system 42, including data from an inertial measurement unit 54 and torque 56, which are input into a dynamics model 58 to determine tire forces F, including the vertical force Fz, longitudinal force Fx, and lateral force Fy. Additional inputs or parameters from vehicle-based sensors, received through the CAN bus system 42, include wheel speed 60, steering wheel angle 62, and yaw rate 64, which are input into a kinematic model 66 to determine tire slip 68. The tire forces F, the slip 68, and a vehicle speed 70, which is obtained through the CAN bus system 42, are input into additional models or estimators 72 to determine the friction energy or frictional energy estimation 74 for the tire 12.

As further described in U.S. Patent No. 9,873,293 the frictional energy estimation 74 may be used to determine a frictional work estimation of the tire 12, which may be employed with an abradability factor to yield an estimate of a wear rate and a wear state of the tire.

In the prior art system 52, the frictional energy estimation 74 was calculated using an approximate function of the slip 68. This function approximated the slip 68 somewhat precisely in the case of longitudinal forces Fx, but rather imprecisely in the case of lateral forces Fy and resulting lateral energy. More particularly, the frictional energy estimation 74 of the prior art system 52 employed an estimation of total frictional energy, without distinguishing the longitudinal and lateral frictional energy contributions. It has been discovered that distinguishing the longitudinal and lateral frictional energy contributions is significant, as these contributions generate different wear profiles for the tire 12. In addition, the wear rate of the tire 12 as determined by the prior art system 52 was considered to be constant with the sliding velocity of the tire, which may not be accurate in all cases, as it has been discovered that the wear rate may change with the sliding velocity of the tire.

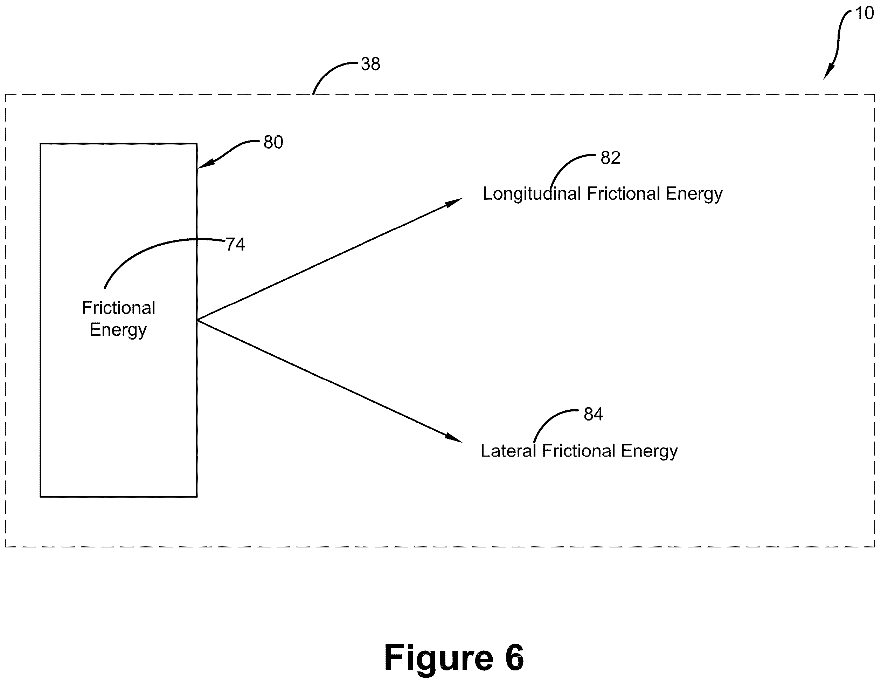

Referring now to Figure 6, the tire wear estimation system 10 of the present invention improves on the prior art system 52. The system 10 of the present invention is in electronic communication with and is executed on the processor 38. The system 10 includes a frictional energy separator 80 that receives an estimation of the total frictional energy 74 of the tire 12. The separator 80 divides the estimation of total frictional energy 74 into a longitudinal frictional energy estimation 82 and a lateral frictional energy estimation 84.

The division performed by the separator 80 is based on a correlation of the longitudinal force Fx and a longitudinal component of tire slip 68 to arrive at the longitudinal frictional energy estimation 82. The division performed by the separator 80 is also based on a correlation of the lateral force Fy and a lateral component of tire slip 68 to arrive at the lateral frictional energy estimation 84.

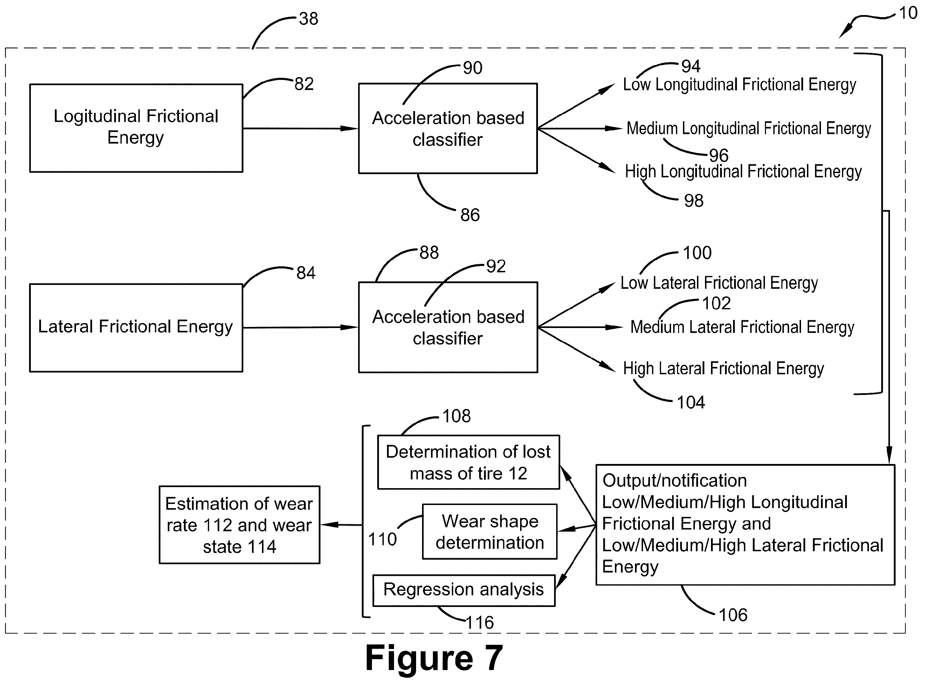

In this manner, the separator 80 enables a precise determination of the longitudinal frictional energy estimation 82 and the lateral frictional energy estimation 84. With additional reference to Figure 7, the system 10 communicates the longitudinal frictional energy estimation 82 from the separator 80 to a longitudinal acceleration classifier 86 and communicates the lateral frictional energy estimation 84 from the separator to a lateral acceleration classifier 88.

The longitudinal acceleration classifier 86 and the lateral acceleration classifier 88 enable the system 10 take higher slip energy into account in the determination of wear, as the wear rate may change with the sliding velocity of the tire 12. More particularly, longitudinal acceleration data 90 is received through the CAN bus system 42 from an accelerometer or inertial measurement unit that is mounted on the vehicle 14 or a wheel component. Lateral acceleration data 92 is also received through the CAN bus system 42 from an accelerometer or inertial measurement unit that is mounted on the vehicle 14 or a wheel component.

The longitudinal acceleration classifier 86 further divides the longitudinal frictional energy estimation 82 into a low longitudinal frictional energy estimation 94, a medium longitudinal frictional energy estimation 96, or a high longitudinal frictional energy estimation 98 based on a standard deviation of the longitudinal acceleration data 90. The lateral acceleration classifier 88 further divides the lateral frictional energy estimation 84 into a low lateral frictional energy estimation 100, a medium lateral frictional energy estimation 102, or a high lateral frictional energy estimation 104 based on a standard deviation of the lateral acceleration data 92.

More particularly, the longitudinal acceleration classifier 86 categorizes the longitudinal frictional energy estimation 82 input data for a given distance, such as one kilometer (km), according to the longitudinal acceleration data 90 over the distance. When the longitudinal acceleration data 90 over the distance indicates a standard deviation below a low threshold, the longitudinal acceleration classifier 86 classifies the longitudinal frictional energy estimation 82 as the low longitudinal frictional energy estimation 94. When the longitudinal acceleration data 90 over the distance indicates a standard deviation above a high threshold, the longitudinal acceleration classifier 86 classifies the longitudinal frictional energy estimation 82 as the high longitudinal frictional energy estimation 98. When the longitudinal acceleration data 90 over the distance indicates a standard deviation between the low threshold and the high threshold, the longitudinal acceleration classifier 86 classifies the longitudinal frictional energy estimation 82 as the medium longitudinal frictional energy estimation 96.

The lateral acceleration classifier 88 categorizes the lateral frictional energy estimation 84 input data for a given distance, such as one kilometer (km), according to the lateral acceleration data 92 over the distance. When the lateral acceleration data 92 over the distance indicates a standard deviation below a low threshold, the lateral acceleration classifier 88 classifies the lateral frictional energy estimation 84 as the low lateral frictional energy estimation 100. When the lateral acceleration data 92 over the distance indicates a standard deviation above a high threshold, the lateral acceleration classifier 88 classifies the lateral frictional energy estimation 84 as the high lateral frictional energy estimation 104. When the lateral acceleration data 92 over the distance indicates a standard deviation between the low threshold and the high threshold, the lateral acceleration classifier 88 classifies the lateral frictional energy estimation 84 as the medium lateral frictional energy estimation 102.

The longitudinal acceleration classifier 86 and the lateral acceleration classifier 88 thus determine respective low, medium, or high frictional energy estimates and generate an output notification 106. The output notification 106 includes the determination of the low longitudinal frictional energy estimation 94, medium longitudinal frictional energy estimation 96, or high longitudinal frictional energy estimation 98, and the determination of the low lateral frictional energy estimation 100, medium lateral frictional energy estimation 102, or high lateral frictional energy estimation 104.

The output notification 106 may thus be employed in a lost mass determination 108 of the tire 12 to estimate a wear rate 112 and/or a current wear state 114 of the tire 12. The output notification may also be employed in a statistical wear shape or distribution determination 110 to estimate the wear rate 112 and/or the current wear state 114 of the tire 12. Exemplary techniques for lost mass determination 108 and wear shape determination 110 are shown and described in U.S. Patent Nos. 9,873,293 and 9,259,976.

The output notification 106 may further be employed in a regression analysis 116 of the tire contact patch 34 at specific areas of the contact patch to estimate the wear rate 112 and/or the current wear state 114 of the tire 12 at each area, which may in turn be employed to determine irregular wear of the tire. For example, the output notification 106 may be employed in regression analyses performed for a centerline or centerplane area of the contact patch 34 and/or near a longitudinal or circumferential edge of the contact patch. The wear rate 112 and/or wear state 114 at each location may be compared to one another to determine if one area of the tread 20 of the tire 12 is wearing more rapidly than another area.

The accuracy of the tire wear estimation system 10 of the present invention has been tested. More particularly, comparisons of wear estimation were conducted between the system 10 of the present invention and a prior art system. In the comparisons, the energy determination of the system 10 of the present invention was more accurate than the energy calculation of the prior art system. Such improved accuracy enables the tire wear estimation system 10 of the present invention to provide improved accuracy and robustness in wear determinations when compared to the prior art.

Returning to Figure 3, output from the system 10, including the notification 106, the wear rate 112, and/or the wear state 114 may be transmitted from the processor 38 through the vehicle CAN bus system 42 to an electronic control system of the vehicle. The notification 106, the wear rate 112, and/or the wear state 114 may then be employed to actuate and thus improve the function of a vehicle control system, such as an anti-lock brake system (ABS), electronic stability control system (ECS), and the like.

The notification 106, the wear rate 112, and/or the wear state 114 may also be wirelessly transmitted to the display device 50, which is accessible to an operator of the vehicle 14 or to a fleet manager. The operator may actuate the vehicle 14 to take appropriate action in response to the notification 106, the wear rate 112, and/or the wear state 114. The fleet manager may schedule an action or instruct the vehicle operator to actuate the vehicle 14 to take appropriate action in response to the notification 106, the wear rate 112, and/or the wear state 114.

In this manner, the tire wear estimation system 10 of the present invention accurately and robustly estimates the wear rate 112 and/or wear state 114 of a tire 12. The system 10 employs a frictional energy separator 80 that divides an estimation of total frictional energy 74 into a longitudinal frictional energy estimation 82 and a lateral frictional energy estimation 84, which is a more precise determination than was performed in the prior art. The system 10 also employs a longitudinal acceleration classifier 86 and a lateral acceleration classifier 88 to determine respective low, medium, or high frictional energy estimates for even greater precision. The accuracy and robustness of the system 10 enables wear rate 112 and/or wear state 114 determinations for tires 12 in many different types of driving conditions, including normal road conditions, wet or icy road conditions, and extreme road conditions.

The present invention also includes a method of estimating the wear of a tire 12. The method includes steps in accordance with the description that is presented above and shown in Figures 1 through 7.

It is to be understood that the structure and method of the above-described tire wear estimation system may be altered or rearranged, or components or steps known to those skilled in the art omitted or added, without affecting the overall concept or operation of the invention. For example, electronic communication may be through a wired connection or wireless communication without affecting the overall concept or operation of the invention. Such wireless communications include radio frequency (RF) and Bluetooth^{®} communications.

## Claims

1. A wear estimation system for a tire (12) supporting a vehicle (14), the system (10) comprising a processor being in electronic communication with a CAN bus system of the vehicle and means for determining a total frictional energy of the tire; wherein the processor is configured to:
receive the total frictional energy of the tire;
divide the total frictional energy into a longitudinal frictional energy estimation and a lateral frictional energy estimation with a separator;
receive the longitudinal frictional energy estimation in a longitudinal acceleration classifier;
determine at least one of a low, medium, and high longitudinal frictional energy estimate with the longitudinal acceleration classifier;
receive the lateral frictional energy estimation in a lateral acceleration classifier;
determine at least one of a low, medium, and high lateral frictional energy estimate with the lateral acceleration classifier;
generate an output notification including the at least one of the low, medium, and high longitudinal frictional energy estimate and the at least one of the low, medium, and high lateral frictional energy estimate; and
determine at least one of an estimated wear rate of the tire and an estimated wear state of the tire from the output notification.

2. The system of claim 1, wherein the means for determining a total frictional energy of the tire include an estimator configured for receiving vehicle sensor data through the CAN bus system.

3. The system of claim 1 or 2, wherein the division performed by the separator is based on a correlation of a longitudinal force and a longitudinal component of tire slip and/or is based on a correlation of a lateral force and a lateral component of tire slip.

4. The system of at least one of the previous claims, wherein the longitudinal acceleration classifier is configured to determine the at least one of the low, medium, and high longitudinal frictional energy estimates based on a standard deviation of longitudinal acceleration data; and/or wherein the longitudinal acceleration classifier is configured to categorize longitudinal frictional energy estimation input data for a given distance according to longitudinal acceleration data over the distance.

5. The system of at least one of the previous claims, wherein, when the longitudinal acceleration data over the distance indicates a standard deviation below a low threshold, the longitudinal acceleration classifier is configured to classify the longitudinal frictional energy estimation as the low longitudinal frictional energy estimation; and/or wherein, when the longitudinal acceleration data over the distance indicates a standard deviation above a high threshold, the longitudinal acceleration classifier is configured to classify the longitudinal frictional energy estimation as the high longitudinal frictional energy estimation; and/or wherein, when the longitudinal acceleration data over the distance indicates a standard deviation between a low threshold and a high threshold, the longitudinal acceleration classifier is configured to classify the longitudinal frictional energy estimation as the medium longitudinal frictional energy estimation.

6. The system of at least one of the previous claims, wherein the lateral acceleration classifier is configured to determine the at least one of the low, medium, and high lateral frictional energy estimates based on a standard deviation of lateral acceleration data; and/or wherein the lateral acceleration classifier is configured to categorize lateral frictional energy estimation input data for a given distance according to lateral acceleration data over the distance.

7. The system of at least one of the previous claims, wherein, when the lateral acceleration data over the distance indicates a standard deviation below a low threshold, the lateral acceleration classifier is configured to classify the lateral frictional energy estimation as the low lateral frictional energy estimation; and/or wherein, when the lateral acceleration data over the distance indicates a standard deviation above a high threshold, the lateral acceleration classifier is configured to classify the lateral frictional energy estimation as the high lateral frictional energy estimation; and/or wherein, when the lateral acceleration data over the distance indicates a standard deviation between a low threshold and a high threshold, the lateral acceleration classifier is configured to classify the lateral frictional energy estimation as the medium lateral frictional energy estimation.

8. The system of at least one of the previous claims, wherein the determination of at least one of an estimated wear rate of the tire and an estimated wear state of the tire from the output notification includes a lost mass determination of the tire.

9. The system of at least one of the previous claims, wherein the determination of at least one of an estimated wear rate of the tire and an estimated wear state of the tire from the output notification includes a statistical wear shape determination.

10. The system of at least one of the previous claims, wherein the determination of at least one of an estimated wear rate of the tire and an estimated wear state of the tire from the output notification includes a regression analysis of a tire contact patch at specific areas of the contact patch.

11. The system of at least one of the previous claims, wherein the specific areas of the contact patch include an area at least one of a centerline of the contact patch and an area near a longitudinal edge of the contact patch.

12. The system of at least one of the previous claims, wherein the system is configured to transmit at least one of the output notification, the wear rate, and the wear state to an electronic control system of the vehicle for actuation of the vehicle in response to the at least one of the output notification, the wear rate, and the wear state.

13. The system of at least one of the previous claims, wherein the system is configured to transmit at least one of the output notification, the wear rate, and the wear state are to a display device that is accessible to at least one of an operator of the vehicle and to a fleet manager for actuation of the vehicle in response to the at least one of the output notification, the wear rate, and the wear state.

14. A wear estimation method for estimating wear of a tire (12) supporting a vehicle (14), the method comprising:
providing a processor in electronic communication with a CAN bus system of the vehicle; and
providing means for determining a total frictional energy of the tire;
wherein the processor receives the total frictional energy of the tire; divides the total frictional energy into a longitudinal frictional energy estimation and a lateral frictional energy estimation with a separator; receives the longitudinal frictional energy estimation in a longitudinal acceleration classifier; determines at least one of a low, medium, and high longitudinal frictional energy estimate with the longitudinal acceleration classifier; receives the lateral frictional energy estimation in a lateral acceleration classifier; determines at least one of a low, medium, and high lateral frictional energy estimate with the lateral acceleration classifier; generates an output notification including the at least one of the low, medium, and high longitudinal frictional energy estimate and the at least one of the low, medium, and high lateral frictional energy estimate; and determines at least one of an estimated wear rate of the tire and an estimated wear state of the tire from the output notification.

15. The method of claim 14, wherein the method is carried out using a system (10) in accordance with at least one of the claims 1 to 13.
